# EUROPEAN PATENT APPLICATION

(11) **EP 4 657 021 A1**
(43) Date of publication of application: **03.12.2025**
(21) Application number: 23918453.4
(22) Date of filing: 19.06.2023
(51) Int. Cl.: G01C 21/26

(54) **INFORMATION PRESENTING DEVICE, CONTROL METHOD, PROGRAM, AND STORAGE MEDIUM**

(30) Priority: 27.01.2023 JP 2023011166
(71) Applicant: Pioneer Corporation, Tokyo 113-0021 (JP)
(72) Inventor: NAKAMURA, Takeshi, Kawagoe-shi, Saitama 350-8555 (JP); KAWAUCHI, Hiroto, Tokyo 112-0002 (JP)
(74) Representative: Viering, Jentschura & Partner mbB Patent- und Rechtsanwälte
(86) International application number: PCT/JP2023/022612
(87) International publication number: WO 2024/157493

(57) **Abstract**

The mobile terminal 1 or the server device 7 functions as an information presentation device and includes a detection unit, a priority correction unit, and a presentation control unit. The detection unit detects plural spots as options for presentation. The priority correction unit corrects, based on the number of spots for each type of the plural spots, the degree of priority of the presentation of the plural spots for the each type. The presentation control unit causes, based on the corrected degree of priority, a presentation unit to present one of the plural spots.

## Description

### TECHNICAL FIELD

The present disclosure relates to the presentation of information regarding a spot.

### BACKGROUND

Conventionally, there is known a technique for presenting information regarding a spot recommended to a user. For example, Patent Literature 1 discloses a server device configured to distribute, to a user, information regarding spots belonging to a genre with high evaluation values determined according to a travelling purpose and a travelling situation of the user.

### PRIOR ART DOCUMENTS

### PATENT LITERATURE

Patent Literature 1: JP 2012-18175A

### SUMMARY

### PROBLEM TO BE SOLVED BY THE INVENTION

According to the technique described in Patent Literature 1, spots which belong to a genre recommended for the user can be presented. In contrast, when the user moves in an area having a lot of spots which belong to the recommended genre, information regarding the spots which belong to the same genre will be presented in a biased manner, and the user may feel troublesome.

The present disclosure has been made in order to solve the above issue, and it is an object of the present invention to provide an information processing device capable of suitably present information regarding a spot.

### MEANS FOR SOLVING THE PROBLEM

One invention is an information presentation device including:
a detection unit configured to detect plural spots as options for presentation:
a priority correction unit configured to correct, based on a number of the plural spots for each type of the plural spots, a degree of priority of the presentation of the plural spot for the each type; and
a presentation control unit configured to cause, based on the corrected degree of priority, a presentation unit to present one of the plural spots.

Another invention is a control method executed by a computer, the control method including:
detecting plural spots as options for presentation:
correcting, based on a number of the plural spots for each type of the plural spots, a degree of priority of the presentation of the plural spot for the each type; and
causing, based on the corrected degree of priority, a presentation unit to present one of the plural spots.

Still another invention is a program causing a computer to function as:
a detection unit configured to detect plural spots as options for presentation:
a priority correction unit configured to correct, based on a number of the plural spots for each type of the plural spots, a degree of priority of the presentation of the plural spot for the each type; and
a presentation control unit configured to cause, based on the corrected degree of priority, a presentation unit to present one of the plural spots.

### BRIEF DESCRIPTION OF THE DRAWINGS

[FIG. 1] It illustrates a configuration example of a navigation system according to an embodiment.
[FIG. 2] It illustrates an example of a schematic configuration of a mobile terminal.
[FIGS. 3A to 3C] FIG. 3A illustrates an example of a table showing the relation between a facility type which is the highest concept of a spot and the degree of priority thereof.
FIG. 3B illustrates an example of a table showing the relation between: a store / restaurant type, which is a subclass of the facility type "restaurant" and which is classified according to the business style; and a combination of a correction value of the degree of priority determined by customization for each store / restaurant type and the corrected degree of priority by the correction value.
FIG. 3C illustrates an example of a table showing the relation between: a chain store / restaurant type which is a subclass of the store / restaurant type "family restaurant"; and a combination of a correction value of the degree of priority determined by customization for each chain store / restaurant type and the corrected degree of priority by the correction value.
[FIG. 4] It is a distribution diagram of proposal spots in the first embodiment.
[FIG. 5] It illustrates a table showing the type number correction value for each type in the first specific example and its degree of priority before and after correction by the type number correction value.
[FIG. 6] It is a distribution diagram of proposal spots in the second embodiment.
[FIG. 7] It illustrates a table showing the type number correction value for each type in the second specific example and its degree of priority before and after correction by the type number correction value.
[FIG. 8] It is an example of a flowchart for outputting recommendation information in the embodiment.
[FIG. 9] It illustrates a configuration example of a spot presentation system according to a modification.
[FIG. 10] It illustrates an example of the schematic configuration of a server device.

### DETAILED DESCRIPTION OF PREFERRED EMBODIMENTS

According to a preferred embodiment of the present invention, there is provided an information presentation device including: a detection unit configured to detect plural spots as options for presentation: a priority correction unit configured to correct, based on a number of the plural spots for each type of the plural spots, a degree of priority of the presentation of the plural spot for the each type; and a presentation control unit configured to cause, based on the corrected degree of priority, a presentation unit to present one of the plural spots. According to this mode, the information presentation device presents spots considering the number of possible spots for presentation per type to thereby prevent biased presentation of similar spots.

In one aspect of the information presentation device, the priority correction unit is configured to correct the degree of priority for the each type to be higher as the number for the each type is smaller. According to this aspect, the information presentation device can prevent biased presentation of similar spots.

In still another aspect of the information presentation device, the priority correction unit is configured to set a threshold value determined based on a largest number among the number for each type, and correct the degree of priority for the each type to increase the degree of priority for a type having the number equal to or smaller than the threshold value. According to this aspect, the information presentation device increases the degree of priority of the presentation for minor types of the spots serving as options for presentation thereby to suitably suppress the presentation of similar spots.

In still another aspect of the information presentation device, the presentation control unit is configured to perform a sequence of processes of selecting one spot from the plural spots in descending order of the corrected degree of priority during a period in which presentation by the presentation unit is permitted, and presenting the selected one spot by the presentation unit. According to this aspect, the information presentation device can prevent biased presentation of similar spots.

In still another aspect of the information presentation device, the presentation control unit is configured to select, based on the corrected degree of priority, a predetermined number of spots from the plural spots, and display a list of the selected predetermined number of spots by the presentation unit. Even according to this aspect, the information presentation device can prevent biased presentation of similar spots.

In still another aspect of the information presentation device, the priority correction unit is configured to switch on-off of correcting the degree of priority based on a current position of a user to which the presentation unit presents the spot. According to this aspect, the information presentation device can accurately switch the on-off of the correction of the degree of priority of the presentation.

In still another aspect of the information presentation device, the priority correction unit is configured to correct the degree of priority based on setting information indicating a setting of on-off of correcting the degree of priority for the each type. According to this aspect, the information presentation device can accurately consider the necessity of the type-specific correction on the degree of priority of presentation.

In still another aspect of the information presentation device, the detection unit is configured to detect the plural spots from spots existing within a predetermined range from a point set on the basis of a current position or a user-specified position regarding a target user of the presentation by the presentation unit. According to this aspect, the information presentation device can preferably specify the plural spots that are candidate for presentation.

In still another aspect of the information presentation device, the detection unit is configured to detect the plural spots from spots existing in an area set on the basis of a moving route of a target user of the presentation of the spot by the presentation unit. According to this aspect, the information presentation device can suitably identify plural spots as options for presentation.

In another preferred embodiment of the present invention, there is provided a control method executed by a computer, including: a detection process to detect plural spots as options for presentation: a priority correction process to correct, based on a number of the plural spots for each type of the plural spots, a degree of priority of the presentation of the plural spot for the each type; and a presentation control process to cause, based on the corrected degree of priority, a presentation unit to present one of the plural spots. By executing this control method, the computer can present spots considering the number of possible spots for presentation per type to thereby prevent biased presentation of similar spots.

In yet another embodiment of the present invention, there is provided a program causing a computer to function as: a detection unit configured to detect plural spots as options for presentation: a priority correction unit configured to correct, based on a number of the plural spots for each type of the plural spots, a degree of priority of the presentation of the plural spot for the each type; and a presentation control unit configured to cause, based on the corrected degree of priority, a presentation unit to present one of the plural spots. By executing this program, the computer can present spots considering the number of possible spots for presentation per type to thereby prevent biased presentation of similar spots. In some embodiments, the program is stored in a storage medium.

### EMBODIMENTS

Hereinafter, preferred embodiments of the present invention are described below with reference to drawings.

### (1) System Configuration

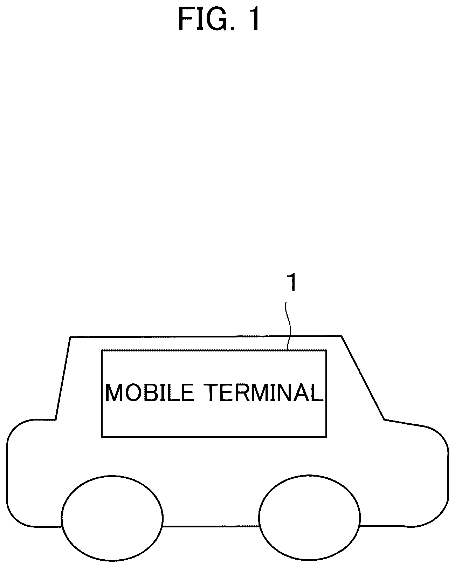

FIG. 1 shows a configuration example of a spot presentation system according to an embodiment. The spot presentation system is a system for presenting information on a spot, and includes a mobile terminal 1 that moves together with a vehicle (also referred to as "target vehicle") on which a user rides. Here, the term "spot" refers to an arbitrary place which can be set as a destination, and may be an arbitrary facility or a place such as a tourist spot.

The mobile terminal 1 moves together with the target vehicle to provide information on a spot existing in the vicinity of the target vehicle. In the present embodiment, the mobile terminal 1 selects a target spot (also referred to as "recommended spot") of recommendation to a user from spots existing in an area of the target vehicle, on the basis of the degree of priority determined for each type of spot. Then, the mobile terminal 1 outputs information (also referred to as "recommendation information") on the recommended spots. The recommendation information may be any information to inform the user of the presence of the recommended spots, or may be an advertisement related to the recommended spots.

The mobile terminal 1 may be a navigation device that is installed in a target vehicle and conducts route guidance to a set destination, or may be a user's portable terminal such as a smartphone, mobile. Further, the mobile terminal 1 may be incorporated into the target vehicle. The mobile terminal 1 is an example of the "information presentation device". Examples of "moving body" include the target vehicle and the user.

### (2) Device Configuration

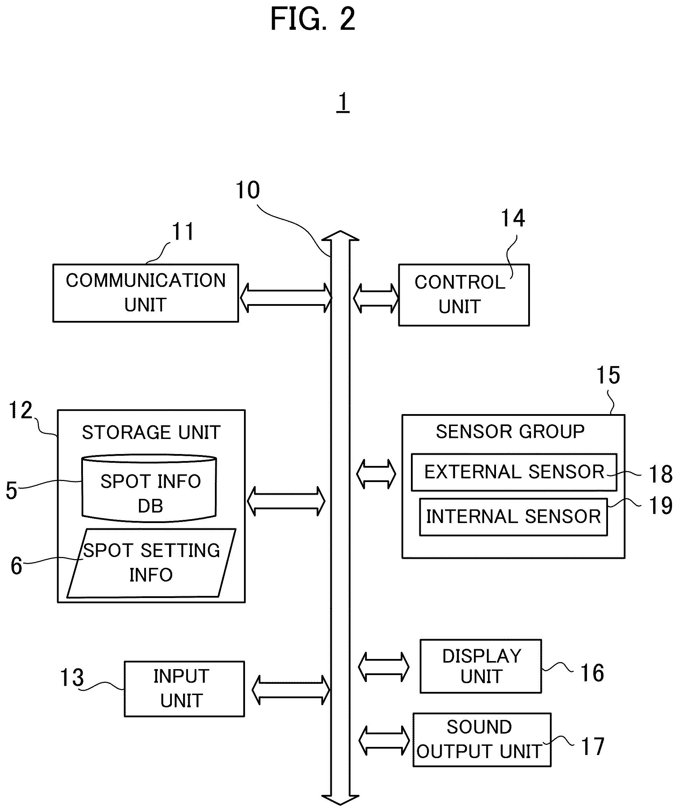

FIG. 2 shows an example of a schematic configuration of the mobile terminal 1. The mobile terminal 1 mainly includes a communication unit 11, a storage unit 12, an input unit 13, a control unit 14, a sensor group 15, a display unit 16, and a sound output unit 17. Each element in the mobile terminal 1 is connected to each other through a bus line 10.

The communication unit 11 performs data communication with other terminals under the control of the control unit 14. In some embodiments, the communication unit 11 may receive update data for updating the spot DB 5 from a management server (not shown).

The storage unit 12 includes various memories, such as a RAM (Random Access Memory), a ROM (Read Only Memory), and a non-volatile memory (including a hard disk drive, a flash memory, and the like). The storage unit 12 stores a program and a software (including an application installed in the mobile terminal 1) for executing a predetermined process by the mobile terminal 1. The above-described application may be any application that provides the user with contents on the mobile terminal 1. The storage unit 12 is used as a work memory of the control unit 14. The program and other information executed by the mobile terminal 1 may be stored in an external device (including a server device) other than the storage unit 12 which communicates with the mobile terminal 1, a storage medium detachable from the mobile terminal 1, or any other storage medium.

The storage unit 12 stores the spot information DB 5 and the spot setting information 6.

The spot information DB 5 is a database of spots that are possibly set as a destination. The spot information DB 5 includes records representing information for respective spots, and each record includes a spot name of a spot, a type (category) of the spot, a chain store / restaurant flag indicating whether or not the spot is a chain store / restaurant, a chain store / restaurant name in the case where the spot is a chain store / restaurant, position information of the spot, and various other attribution information, a voice data for explaining the spot by voice output, and photographic data of the spot. In the present embodiment, the types of spots are classified hierarchically in a plurality of layers. The spot information DB 5 may be updated under the control of the control unit 14 based on information that the communication unit 11 receives from a management server (not shown).

The spot setting information 6 is setting information necessary for determining recommended spots. The spot setting information 6 includes recommended spot type information and priority information. The recommended spot type information is information indicating the type of spots to be selected as recommended spots. The priority information indicates the degree of priority (degree of recommendation) to be presented as a recommended spot for each type of optional spots to be selected as a recommended spot. Therefore, if there are a plurality of spots as options for the recommended spot, the recommendation information on the spot selected in descending order of the degree of priority according to the priority information is output.

The spot setting information 6 may be updated, for example, based on an input by the input unit 13 from the user or may be updated based on the action history of the user of the target vehicle. Examples of the activity history include a history of visit (which may be a history of settings of destination) and a search history.

The storage unit 12 further stores information on output permission area which is an area in which the output of the recommendation information for a spot is allowed. The output permission area for a spot is set to include the position of the spot. The mobile terminal 1 outputs the recommendation information on a spot if the current position of the target vehicle is within the output permission area set for the spot. Typically, the mobile terminal 1 audio-outputs the recommendation information of a spot during a period in which the target vehicle is approaching the spot within the distance set for the spot. The output permission area for each spot may be individually set with reference to the spot information DB 5 in which information on the output permission area for each spot is included in the record of each spot, or may be uniformly set for all spots.

The mobile terminal 1 identifies a spot existing in a predetermined range from the current position of the target vehicle as an option (also referred to as "optional spot") for a recommended spot. Then, if the current position of the target vehicle is included in the output permission area of the optional spot, the mobile terminal 1 audio-outputs the recommendation information on the optional spot. In addition, if the current position of the target vehicle is included in the output permission areas of a plurality of optional spots, the mobile terminal 1 selects a recommended spot sequentially in descending order of the degree of priority of the presentation as the recommended spot, and audio-outputs the recommendation information on the selected recommended spot. The mobile terminal 1 does not output the recommendation information on spots corresponding to the output permission areas which do not include the current position of the target vehicle regardless of whether or not the recommendation information remains never to be output.

As such, in accordance with whether or not the current position of the target vehicle exists in the output permission area of a spot, the mobile terminal 1 determines the output permission period during which output of the recommendation information on the spot is permitted. Then, the mobile terminal 1 sequentially executes processing for outputting the recommendation information on a spot in its output permission period. As a result, the lower degree of priority an optional spot has, the less likely the recommendation information thereof is output.

In the case where the mobile terminal 1 executes the route guidance of the target vehicle, the storage unit 12 may include various data necessary for the route guidance. For example, the storage unit 12 may further store a map DB (Database) which is data required for map display based on a predetermined position (e.g., position of the target vehicle). In this case, the map DB includes, for example, road data representing a road network by a combination of nodes and links.

The input unit 13 is one or more user interfaces that accept user input, and examples of the input unit 13 include a button, a touch panel, a remote controller, and a voice input device. The display unit 16 displays information under the control of the control unit 14. Examples of displays 16 include a display and a projector. The sound output unit 17 outputs voice or sound under the control of the control unit 14. Examples of the sound output unit 17 includes a speaker. The sound output unit 17 according to this embodiment is an example of the "presentation unit".

The sensor group 15 includes sensors that perform sensing regarding the condition of the target vehicle or the environment outside the vehicle. The sensor group 15 includes external sensors 18, internal sensors 19. The external sensors 18 are one or more sensors for recognizing the surrounding environment of the target vehicle and examples thereof include a lidar, a radar, an ultrasonic sensor, an infrared sensor, and a sonar. The internal sensors 19 are one or more sensors for positioning the target vehicle, and examples thereof include a GNSS (Global Navigation Satellite System), a receiver, a gyroscope sensor, an IMU (Inertial Measurement Unit), and a vehicle speed sensor. The sensor group 15 may include sensors such that the control unit 14 can derive the position of the target vehicle directly or indirectly (i.e., by performing estimation processing) from the output from the sensor group 15.

The control unit 14 includes a CPU (Central Processing Unit) and a GPU (Graphics Processing Unit) and controls the entire mobile terminal 1. The control unit 14 functions as a "detection unit", "priority correction unit", "presentation control unit" and a computer to execute the program.

The process performed by the control unit 14 is not necessarily realized by software based on a program, and may be realized by any combination of hardware, firmware, and software. The control unit 14 may be implemented using a user-programmable integrated circuit such as a FPGA (Field-Programmable Gate Array) and a microcomputer and a program to be executed in this embodiment may be realized by the integrated circuit. In this case, a program to be executed by the control unit 14 in this embodiment may be realized by using this integrated circuit.

The configuration of the mobile terminal 1 shown in FIG. 2 is an example, and various changes may be made to the configuration shown in FIG. 2. For example, instead of storing the spot information DB 5 in the storage unit 12, the control unit 14 may receive information corresponding to the spot information DB 5 from the management server (not shown) through the communication unit 11. In another example, at least one of the input unit 13, the display unit 16, and the sound output unit 17 may be provided in the target vehicle as an external device of the mobile terminal 1 and may supply the generated signal to the mobile terminal 1. The at least some sensors of the sensor group 15 may be sensors mounted on the target vehicle. In this instance, the mobile terminal 1 may acquire, from the target vehicle, the data outputted by the sensors mounted on the target vehicle based on a communication protocol such as a CAN (Controller Area Network).

### (3) Spot setting information

Next, a supplementary description will be given of the spot setting information 6.

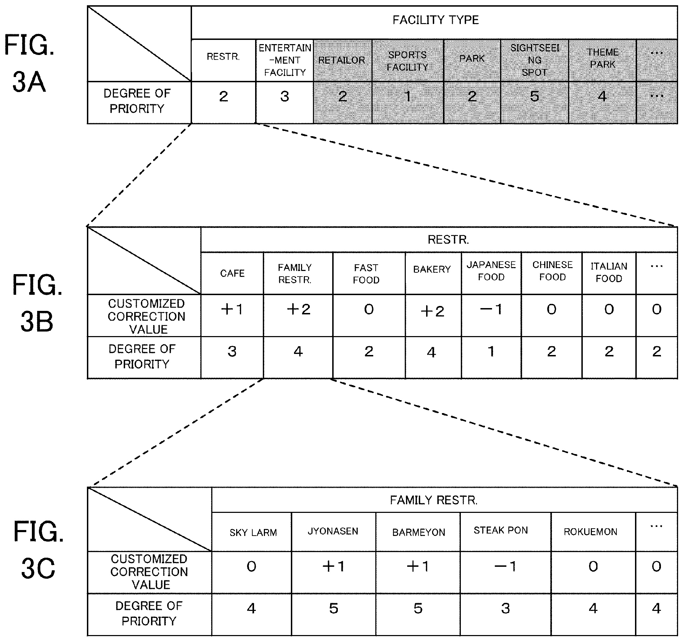

FIG. 3A is an example of a table showing the relation between the facility type, which is the type in the highest concept layer of spots, and the degree of priority. FIG. 3B illustrates an example of a table showing the relation between: a store / restaurant type, which is a subclass of the facility type "restaurant" and which is classified according to the business style; and a combination of a correction value of the degree of priority determined by customization for each store / restaurant type and the corrected degree of priority by the correction value. FIG. 3C illustrates an example of a table showing the relation between: a chain store / restaurant type which is a subclass of the store / restaurant type "family restaurant"; and a combination of a correction value of the degree of priority determined by customization for each chain store / restaurant type and the corrected degree of priority by the correction value. Hereinafter, the term "customized correction value" indicates a customized correction value for the degree of priority (i.e., the user-specified correction value for the degree of priority).

In FIG. 3A, the facility types with colored background indicates facility types that are not registered as target types of recommended spots in the recommended spot type information. Here, it is assumed that, through user's operations, facility types "restaurant" and "entertainment facility" are registered in the recommended spot type information as the targets of the recommended spots, and that other facility types "retailer", "sports facility", "park", "sightseeing spot", and "theme park" are not registered in the recommended spot type information as the targets of the recommended spot. The recommended spot type information may be updated based on the user's activity history (history of visit, search history, etc.) as well as the user's operations. The recommended spot type information may include information indicating whether or not subclasses (subordinate concepts) of the facility type in the lower layer are targeted as recommended spots.

Further, as shown in FIG. 3A, in the priority information included in the spot setting information 6, the degree of priority on a scale of "1" to "5" is recorded for each facility type. In this example, since the user frequently visits spots belonging to "sightseeing spot" and rarely go to spots belonging to "sports facility", the priority information is generated based on the user's operation or action history such that "sightseeing spot" become the highest degree of priority and "sports facility" become the lowest degree of priority. In addition, as shown in FIG. 3B, in the store / restaurant types which are subordinate concepts of the facility type "restaurant", the customized correction values for individually correcting the degree (here, "2") of priority of the facility type "restaurant" are set in the range of "-1" to "+2". Here, since the user frequently uses spots belonging to restaurants "family restaurant" and "bakery" and rarely goes to spots belonging to "Japanese restaurant", priority information is generated on the basis of the user's operation or action history so that customized correction values of "family restaurant" and "bakery" become the highest value (+2) and the customized correction value of "Japanese restaurant" become the lowest value (-1). In addition, as shown in FIG. 3C, in the chain store / restaurant types which are subordinate concepts of the store / restaurant type "family restaurant", customized correction values for individually correcting the degree (here, "4") of priority of the store / restaurant type "family restaurant" are set in the range of "-1" to "+1". Here, since the user frequently uses spots belonging to "JONASEN" and "BARMEYON" among restaurants and rarely goes to spots belonging to "STEAK PON", priority information is generated on the basis of the user's operation or action history such that customized correction values of "JONASEN" and "BARMEYON" are the highest value (+1) and the customized correction value of "STEAK PON" is the lowest value (-1).

As described above, degrees of priority and customized correction values for respective types in each concept layer are set in accordance with the user's operations or action history of the user and registered in the priority information of the spot setting information 6.

### (4) Determination method of recommended spots

Next, the determination method of the recommended spots will be described. In summary, the control unit 14 identifies optional spots based on the area (also referred to as "target area") determined based on the position of the target vehicle, and then corrects, based on the number of the optional spots for each type, the degree of priority for the each type indicated by the priority information. Then, the control unit 14 determines the recommended spots according to the degree of priority corrected on the basis of the number of the optional spots for each type and audio-outputs the recommendation information on the determined recommended spots. Thus, the control unit 14 suitably suppresses repeatedly presenting similar spots.

First, the determination of the target area will be described. The control unit 14 sets the target area based on the current position of the target vehicle identified based on the output signal from the sensor group 15. In this case, the control unit 14, for example, defines a range within a predetermined distance from the current position of the target vehicle as the target area.

Next, the identification of optional spots will be described. The control unit 14 extracts records of spots existing in the target area from the spot information DB 5 and recognizes the types of the spots from the extracted records. Then, the control unit 14 determines target type(s) for selecting recommended spots on the basis of the recommended spot type information of the spot setting information 6 and determines the optional spots which belong to the determined target type(s). In this case, for example, among the various spots existing in the target area, the control unit 14 identifies spots belonging to one of the target types(s) indicated by the recommended spot type information as optional spots.

Next, the correction of the degree of priority based on the number of the optional spots for each type will be described. The control unit 14 counts the number of optional spots for each type in the same concept layer and corrects, on the basis of the number of optional spots for each type, the degree of priority for each optional spot indicated by the spot setting information 6. In this case, the control unit 14 corrects the degree of priority for each type to increase the degree of priority for spots belonging to a type with decreasing number of optional spots for the type. In other words, the control unit 14 performs correction to relatively increase the degree of priority for a first type with a large number of optional spots with respect to the degree of priority for a second type with a small number of optional spots. Hereafter, the correction value for the degree of priority based on the number of optional spots for each type is also referred to as "type number correction value".

Then, the control unit 14 selects an optional spot as a recommended spot in descending order of the degree of priority corrected by the type number correction value, and performs processing for sequentially outputting the recommendation information of the selected optional spot during a period in which the current position belongs to the output permission area of the optional spot. The control unit 14 generates the recommendation information by referring to record of the spot information DB 5 corresponding to the recommended spot.

Thus, by determining the recommended spot based on the degree of priority in which the type number correction value is reflected, it is possible to prevent frequently outputting the recommendation information on spots which belong to the same type, suitably reducing the troublesomeness of the user receiving the recommendation information of the spots which belong to the same type.

Here, a description will be given of specific examples (a first specific example and a second specific example) of the correction of the degree of priority based on the number of optional spots for each type on the assumption that information corresponding to the table shown in FIGS. 3A to 3C is stored in the storage unit 12 as the spot setting information 6.

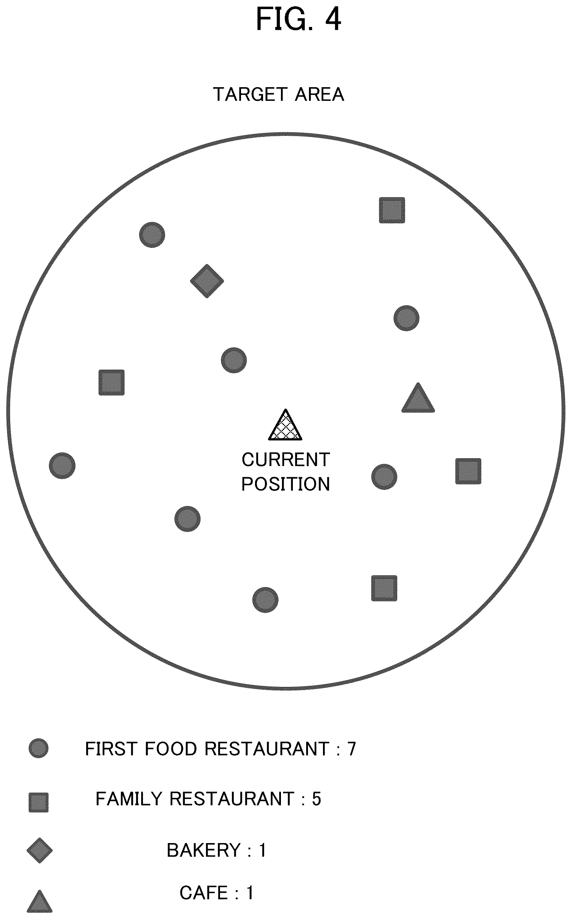

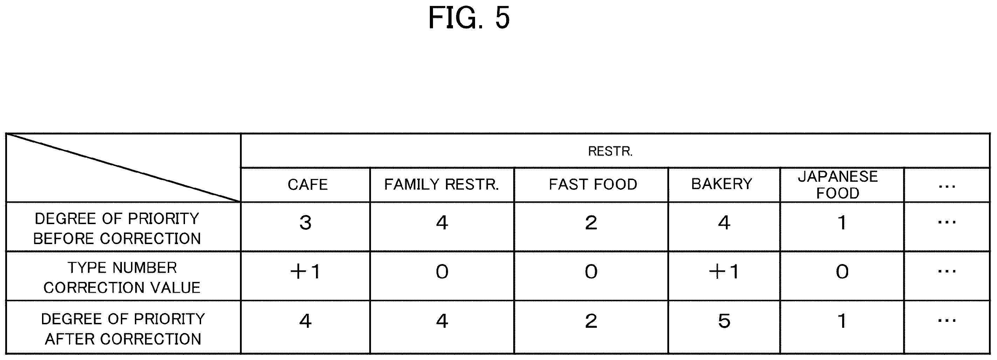

FIG. 4 is a distribution diagram of optional spots in the first specific example. Further, FIG. 5 is a table showing the type number correction value for each type and degrees of priority before and after correction by the type number correction value in the first specific example. In the first specific example, the control unit 14 determines a range within a predetermined distance from the current position of the target vehicle as the target area. Then, the control unit 14 identifies, among the spots within the determined target area, spots which belong to the facility type "restaurant" as optional spots. In this way, if a plurality of facility types (here, "restaurant" and "entertainment facility") are targeted according to the recommended spot type information, the control unit 14 may select any one facility type and determines spots corresponding to the selected facility type as optional spots.

Then, the control unit 14 counts the number of optional spots for each store / restaurant type which are subclasses of the selected facility type "restaurant". Here, as shown in FIG. 4, the number of "first food restaurant" is seven, the number of "family restaurant" is five, the number of "bakery" is one, and the number of "cafe" is one.

Then, the control unit 14 determines the type number correction value based on the counted number of optional spots for each store / restaurant type. Here, as an example, the control unit 14 sets a threshold value (i.e., 7 / 4) which is 1 / 4 of the largest number of optional spots among the store / restaurant types. Then, the control unit 14 sets the type number correction value "1" for the degree of priority of the types (here, "cafe" and "bakery") having the number of optional spots equal to or smaller than the threshold value while setting the type number correction value "0" for the degree of priority of the other types. The above threshold value is an example of the "threshold value determined based on the largest number among the number for each type".

In some embodiments, instead of this example, the control unit 14 may increase type number correction value in stages with decreasing number of optional spots. The control unit 14 may set the type number correction value to a negative value for such a type that the number of optional spots is more than a predetermined value.

In the example shown in FIG. 5, the corrected degree of priority of "bakery" is the largest degree "5". Thus, if there are a plurality of optional spots in their output permission periods, the control unit 14 determines an optional spot corresponding to "bakery" as a recommended spot that should be preferentially presented, and outputs the recommendation information thereof. After outputting the recommendation information on the optional spot corresponding to the "bakery", the control unit 14 outputs the recommendation information on the optional spot corresponding to the "cafe" or the "family restaurant" having the second highest corrected degree of priority following the type "bakery". If there are multiple types having the same corrected degree of priority, the control unit 14 may preferentially select, as a recommended spot, a type (here, "cafe") in descending order of the type number correction value from the multiple types having the same corrected degree of priority, or may select a recommended spot at random from the multiple types having the same corrected degree of priority.

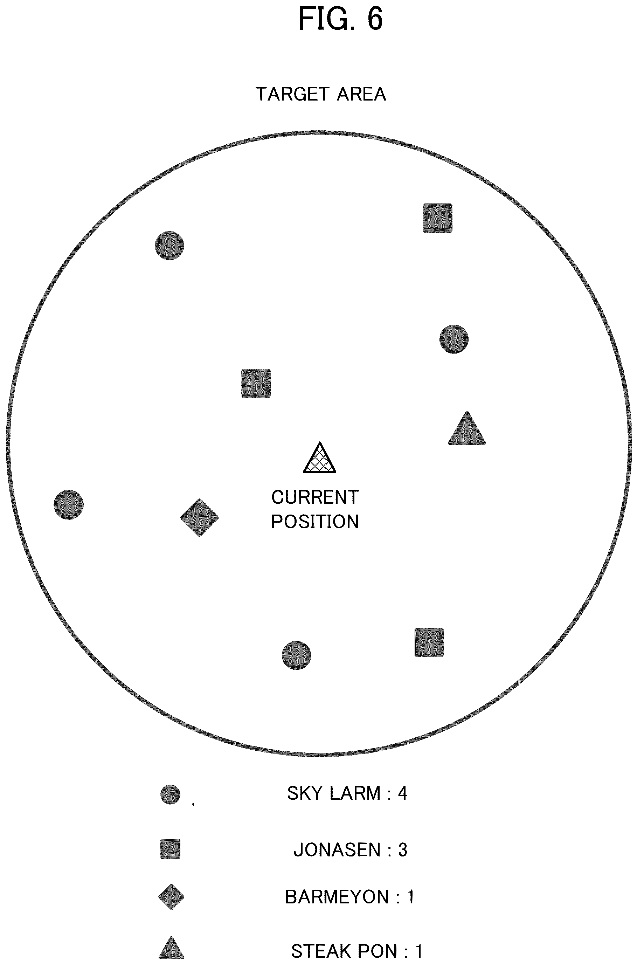

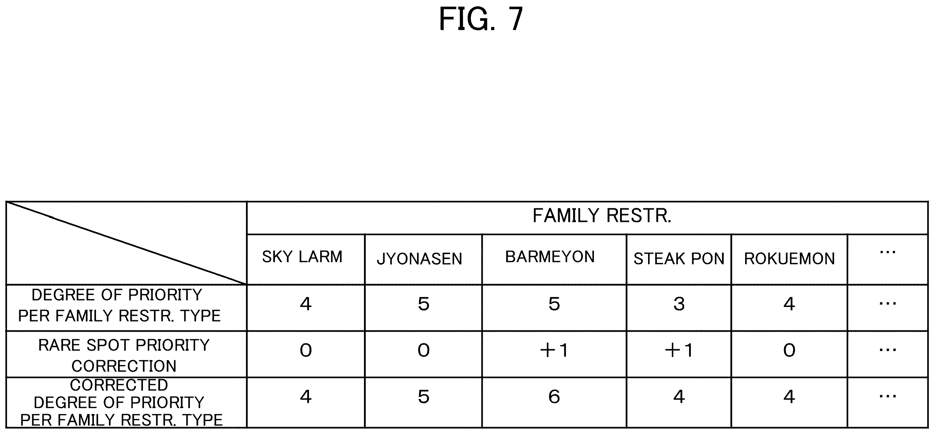

FIG. 6 is a distribution diagram of optional spots in the second specific example. FIG. 7 is a table showing the type number correction value for each type and the degree of priority before and after correction by the type number correction value in the second specific example. In the second specific example, the control unit 14 identifies, among spots in the target area, spots whose types belong to "family restaurant" as optional spots. As described above, the control unit 14 may select a type which is a subordinate concept of the facility type designated as the target of the recommended spot by the recommended spot type information, and determine the spots corresponding to the selected type as the optional spots.

Then, the control unit 14 counts the number of optional spots for each chain store / restaurant type which are subclasses of the selected store / restaurant type "family restaurant". Here, as shown in FIG. 6, the number of "SKYLARM" is four, the number of "JONASEN" is three, the number of "BARMEYON" is one, and the number of "STEAK PON" is one.

Then, the control unit 14 determines the type number correction value for each chain store / restaurant type, based on the counted number of optional spots for each chain store / restaurant type. Here, as an example, the control unit 14 sets a threshold value (i.e., 4 / 3) which is one third of the largest number of optional spots among all chain store / restaurant types. Then, the control unit 14 sets the type number correction value "+1" for types (here, "BARMEYON" and "STEAK PON") having the number of optional spots equal to or smaller than the threshold value while setting the type number correction value "0" for the other types. The above threshold value is an example of the "threshold value determined based on the largest number among the number for each type".

Then, in the example shown in FIG. 7, if there are a plurality of optional spots under their output permission period, the control unit 14 sets the optional spot corresponding to "BARMEYON" as a recommended spot to be preferentially presented and outputs the recommendation information thereof since the corrected degree of priority of "BARMEYON" is the largest degree "6". Once the recommendation information of the optional spot corresponding to the "BARMEYON" is outputted, the control unit 14 outputs the recommendation information on the optional spot corresponding to the "JONASEN" having the second highest degree of priority after the correction following the "BARMEYON".

According to the first specific example and the second specific example, it is possible to suitably reduce the troublesomeness that the user frequently receives the recommendation information regarding similar spots.

### (5) Processing Flow

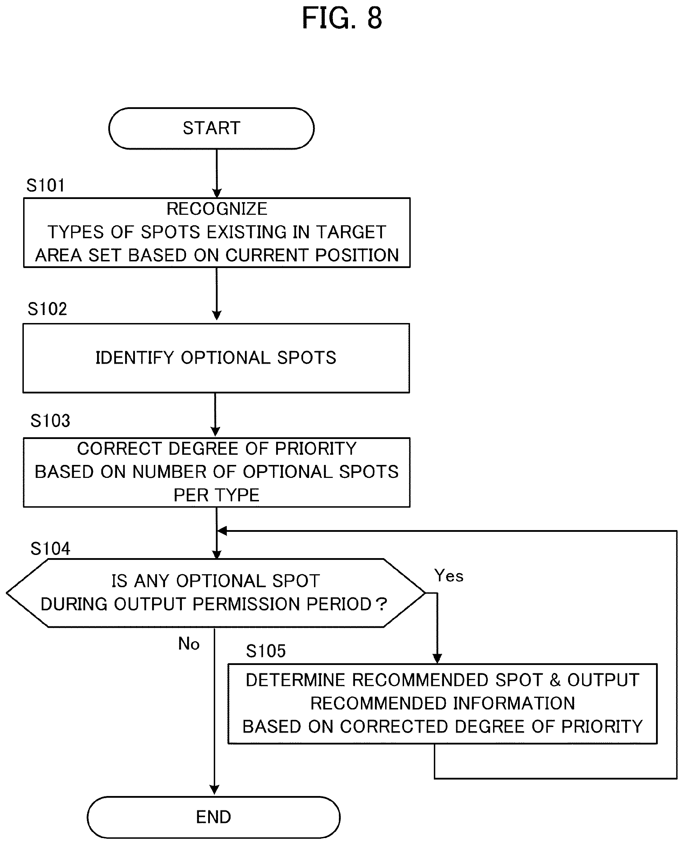

FIG. 8 is an example of a flowchart relating to the output of recommendation information that the control unit 14 executes in this embodiment. The control unit 14 repeatedly executes the processing of the flowchart.

First, the control unit 14 recognizes respective types of spots existing in the target area set based on the current position of the target vehicle by referring to the spot information DB 5 (step S101). Then, the control unit 14 identifies optional spots from the spots existing in the target area (step S102). In this case, the control unit 14 identifies, from the spots existing in the target area, the spots belonging to the type(s) indicated by the recommended spot type information of the spot setting information 6 as the optional spots.

Then, the control unit 14 corrects the degree of priority for each of the types indicated by the priority information of the spot setting information 6 based on the number of optional spots for each type obtained by classifying the optional spots according to the types in the same concept layer (step S103). Then, the control unit 14 determines whether or not there are any optional spots in the middle of their output permission periods (step S104). In this case, the control unit 14 determines whether or not the current position of the target vehicle exists in the output permission area set for each optional spot. Then, upon determining that there are no optional spots in the middle of their output permission periods (step S104; No), the control unit 14 terminates the process of the flowchart.

Upon determining that any optional spots in the middle of their output permission periods exists (step S104; Yes), the control unit 14 determines the recommended spot on the basis of the degree of priority after the correction at step S103 and audio-outputs the recommendation information on the determined recommended spot (step S105). The control unit 14 memorizes the recommended spot subjected to the voice output in an identifiable manner.

Thereafter, the control unit 14 proceeds back to the process at step S104 to determine whether or not there is an optional spot in the middle of its output permission period among the optional spots, other than the optional spots whose recommendation information has already been output. Upon determining that there is such an optional spot in the output permission period, the control unit proceeds to the process at step S105 and repeatedly executes a process of audio-outputting the recommendation information on the recommended spot determined on the basis of the corrected degree of priority. In some embodiments, after audio-outputting the recommendation information on the recommended spot at step S105, the control unit 14 may proceed back to the process at step S 104 instead of step S105 to perform the setting of the target area, the selection of the optional spots, the correction of the degree of priority, and the like again. In this case, the control unit 14 may exclude the spots whose recommendation information has been already output from the optional spots.

### (6) Modifications

Next, a description will be given of preferred modifications to the embodiment described above. The following modifications may be applied to the above embodiment in any combination.

### (First Modification)

At least some of the process performed by the mobile terminal 1 may be performed by a server device that performs data communication with the mobile terminal 1.

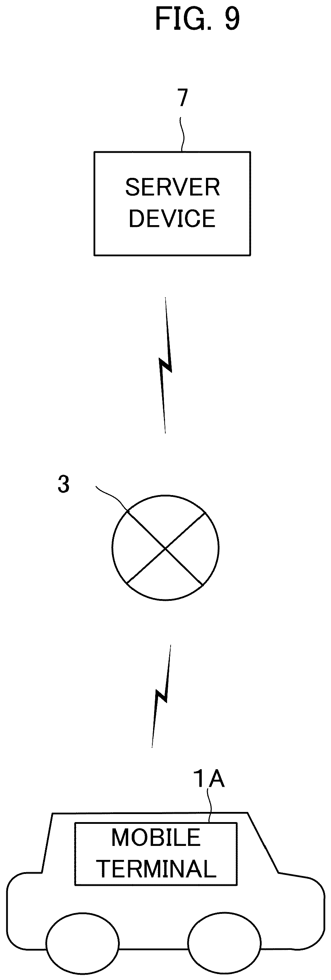

FIG. 9 shows a configuration example of a spot presentation system according to the first modification. The spot presentation system includes a mobile terminal 1A and a server device 7. The mobile terminal 1A and the server device 7 perform data communication with each other through the communication network 3.

The mobile terminal 1A has the same configuration as the mobile terminal 1 described in the above example (see FIG. 2). Given that the server device 7 processes based on the spot information DB 5 and the spot setting information 6, the mobile terminal 1A may not have the spot information DB 5 and the spot setting information 6. The mobile terminal 1A transmits the upload signal including the information output by the sensor group 15 and the input information input by the input unit 13 to the server device 7.

On the basis of an upload signal or the like received from the mobile terminal 1A, the server device 7 generates output instruction data for instructing the mobile terminal 1A to display or audio-output information. Then, the server device 7 transmits the generated output instruction data to the mobile terminal 1. For example, the server device 7 performs a process of the flowchart shown in FIG. 8 on the basis of an upload signal or the like received from the mobile terminal 1A.

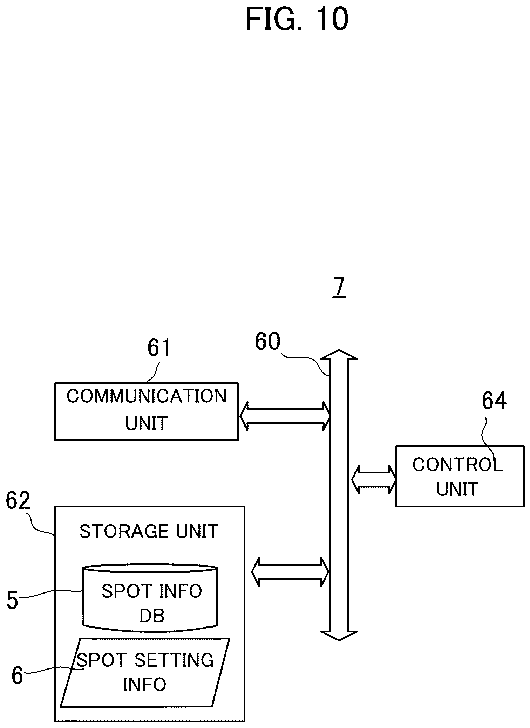

FIG. 10 shows an example of the schematic configuration of the server device 7. The server device 7 mainly includes a communication unit 61, a storage unit 62, and a control unit 64. Each element in the server device 7 is connected to one another via a bus line 60.

The communication unit 61 performs data communication with an external device such as the mobile terminal 1A under the control of the control unit 64. The storage unit 62 is configured of various memories such as a RAM, a ROM, a non-volatile memory (including a hard disk drive, a flash memory, etc.). The storage unit 62 stores a program for the server device 7 to execute a predetermined process. The storage unit 62 includes the spot information DB 5 and the spot setting information 6. The control unit 64 includes a CPU and/or a GPU and controls the entire server device 7. The control unit 64 executes a process required for outputting recommendation information to the mobile terminal 1A by executing a program stored in the storage unit 62.

Thus, in the present modification, based on the information received from the server device 7, the mobile terminal 1A can suitably output the recommendation information. In this modified example, the server device 7 is an example of the "information presentation device".

### (Second Modification)

The control unit 14 may display the recommendation information on the spot instead of audio-outputting the recommendation information on the spot by the sound output unit 17. In this modification, the display unit 16 is an example of the "presentation unit".

In this case, for example, the control unit 14 may determine a predetermined number of recommended spots based on the degree of priority corrected by the type number correction value and display the list of the recommendation information on the determined predetermined number of recommended spots. In this case, the control unit 14 generates the list to arrange the recommended spots in descending order of the degree of priority corrected by the type number correction value. Even in this case, the control unit 14 can suitably suppress the bias of the type of the spots to display the recommendation information on the list. In another example, the control unit 14 sequentially select a recommended spot one by one in descending order of the degree of priority corrected by the type number correction value to display the recommendation information on the selected recommended spot for a predetermined time. In this case, the control unit 14 repeatedly determines the recommended spot and outputs the recommendation information. Even in this case, the control unit 14 can suitably suppress displaying the recommendation information on similar types of spots.

### (Third Modification)

If the route to the destination is set, the control unit 14 may set the target area based on the set route instead of setting the target area based on the current position of the target vehicle. In this instance, the control unit 14 may set the target area that is within a predetermined distance (for example, within 500 meters from the road) from the set route, i.e., within a predetermined distance from the roads on the user's route. In this case, an area having the width of a predetermined distance along the set route is set as the target area, and the recommended spot is determined according to the degree of priority corrected based on the number of optional spots for each type existing around the route to the destination. Even in this case, the control unit 14 prevents frequently outputting the recommendation information on similar spots existing along the route thereby to suitably reduce the troublesomeness of the user who receives the recommendation information on the similar spots.

### (Fourth Modification)

Instead of setting the target area based on the current position of the target vehicle, the control unit 14 may set the target area based on a position (also referred to as "user-specified position") specified by the user by the input unit 13. In this case, the control unit 14 may set an area within a predetermined distance from the user-specified position as the target area, or may set an administrative district including the user-specified position as the target area. Even in this case, the control unit 14 can suitably determine a target area for selecting optional spots.

### (Fifth Modification)

The control unit 14 may generate, based on the input to the input unit 13, setting information on setting of on-off of the correction of the degree of priority based on the type number correction value, and store it in the storage unit 12. The control unit 14 performs correction of the degree of priority based on the type number correction value only if the setting of the correction of the degree of priority based on the type number correction value is turned on.

In this case, upon determining that the setting of the correction of the degree of priority based on the type number correction value is turned on, the control unit 14 executes processing of the flowchart shown in FIG. 8. On the other hand, upon determining that the setting of the correction of the degree of priority based on the type number correction value is turned off, the control unit 14 does not execute the process at step S103 of the flowchart, and determines at step S105 the recommended spot on the basis of the degree of priority indicated by the priority information of the spot setting information 6.

### (Sixth Modification)

In accordance with whether or not the current position of the target vehicle is the user's living area (that is, the area near the user's house where the user frequently comes), the control unit 14 may automatically switch on-off settings of the correction of the degree of priority based on the type number correction value.

For example, upon determining that the current position of the target vehicle is within the living area of the user, the control unit 14 turns on the correction of the degree of priority based on the type number correction value to prevent the recommendation information on similar spots from being frequently output. On the other hand, upon determining that the current position of the target vehicle is outside the living area of the user (e.g., while travelling), the control unit 14 turns off the correction of the degree of priority based on the type number correction value to let the user identify local specialties such as local gourmets. The living area may be a user-specified area by the input unit 13, or may be an area determined based on the user's action history, or may be an area to which the user's home belongs (e.g., a prefecture in which the user's home is located). The information on the living area is stored in the storage unit 12 or the like.

Thus, according to this modification, in accordance with the current position of the target vehicle, the control unit 14 can appropriately set on-off of the correction of the degree of priority based on the type number correction value.

### (Seventh Modification)

According to whether or not the current position of the target vehicle is an urban area, the control unit 14 may automatically switch on-off settings of the correction of the degree of priority based on the type number correction value.

For example, upon determining that the current position of the target vehicle is in an urban area, the control unit 14 turns on the correction of the degree of priority based on the type number correction value so that the recommendation information of similar spots should not be frequently output. On the other hand, upon determining that the current position of the target vehicle is not an urban area, the control unit 14 turns off the correction of the degree of priority based on the type number correction value so that the user can identify local specialties such as local gourmets. Information indicating areas serving as an urban area is stored in advance in the storage unit 12 or the like, for example.

Thus, even in the present modification, in accordance with the current position of the target vehicle, the control unit 14 can appropriately set on-off settings of the correction of the degree of priority based on the type number correction value.

### (Eighth Modification)

In accordance with user input to the input unit 13, the control unit 14 generates setting information, for each type of spots, regarding the setting of on-off of the correction of the degree of priority based on the type number correction value, and may store it in the storage unit 12.

In this instance, at step S103 in the flowchart in FIG. 8, the control unit 14 calculates the type number correction value for types in which the above-described setting is turned on whereas it does not calculate the type number correction value for the other types in which the above-described setting is turned off. Then, at step S105, the control unit 14 corrects, based on the type number correction value, the degree of priority of the former types for which the type number correction value is calculated and then determines the recommended spot based on the degree of priority after the correction.

As described above, the mobile terminal 1 or the server device 7 functions as an information presentation device and includes a detection unit, a priority correction unit, and a presentation control unit. The detection unit detects plural spots as options for presentation. The priority correction unit corrects, based on the number of spots for each type of the plural spots, the degree of priority of the presentation of the plural spots for the each type. The presentation control unit causes, based on the corrected degree of priority, a presentation unit to present one of the plural spots. Thus, it is possible to suitably determine the spot to be presented based on the number of spots per type.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

### DESCRIPTION OF REFERENCE NUMERALS

- 1, 1A: Mobile terminal
- 3: Communication network
- 5: Spot information DB
- 7: Server device
- 11, 61: Communication unit
- 12, 62: Storage unit
- 13: Input unit
- 14, 64: Control unit
- 15: Sensor group
- 16: Display unit
- 17: Sound output unit

## Claims

1. An information presentation device, comprising:
a detection unit configured to detect plural spots as options for presentation:
a priority correction unit configured to correct, based on a number of the plural spots for each type of the plural spots, a degree of priority of the presentation of the plural spot for the each type; and
a presentation control unit configured to cause, based on the corrected degree of priority, a presentation unit to present one of the plural spots.

2. The information presentation device according to claim 1,
wherein the priority correction unit is configured to correct the degree of priority for the each type to be higher as the number for the each type is smaller.

3. The information presentation device according to claim 2,
wherein the priority correction unit is configured to
set a threshold value determined based on a largest number among the number for each type, and
correct the degree of priority to increase the degree of priority for a type having the number equal to or smaller than the threshold value.

4. The information presentation device according to claim 1,
wherein the presentation control unit is configured to perform a sequence of processes of
selecting one spot from the plural spots in descending order of the corrected degree of priority during a period in which presentation by the presentation unit is permitted, and
presenting the selected one spot by the presentation unit.

5. The information presentation device according to claim 1,
wherein the presentation control unit is configured to
select, based on the corrected degree of priority, a predetermined number of spots from the plural spots, and
display a list of the selected predetermined number of spots by the presentation unit.

6. The information presentation device according to any one of claims 1 to 5,
wherein the priority correction unit is configured to switch, based on a current position of a user to which the presentation unit presents the spot, on-off of correcting the degree of priority.

7. The information presentation device according to any one of claims 1 to 5,
wherein the priority correction unit is configured to correct the degree of priority based on setting information indicating a setting of on-off of correcting the degree of priority for the each type.

8. The information presentation device according to any one of claims 1 to 5,
wherein the detection unit is configured to detect the plural spots from spots existing within a predetermined range from a point set on the basis of a current position or a user-specified position regarding a target user of the presentation by the presentation unit.

9. The information presentation device according to any one of claims 1 to 5,
wherein the detection unit is configured to detect the plural spots from spots existing in an area set on the basis of a moving route of a target user of the presentation of the spot by the presentation unit.

10. A control method performed by a computer, comprising:
a detection process to detect plural spots as options for presentation:
a priority correction process to correct, based on a number of the plural spots for each type of the plural spots, a degree of priority of the presentation of the plural spot for the each type; and
a presentation control process to cause, based on the corrected degree of priority, a presentation unit to present one of the plural spots.

11. A program causing a computer to function as:
a detection unit configured to detect plural spots as options for presentation:
a priority correction unit configured to correct, based on a number of the plural spots for each type of the plural spots, a degree of priority of the presentation of the plural spot for the each type; and
a presentation control unit configured to cause, based on the corrected degree of priority, a presentation unit to present one of the plural spots.

12. A storage medium storing the program according to claim 11.
